## Europäisches Patentamt

## European Patent Office

## Office européen des brevets

(11) Veröffentlichungsnummer: **0 130 346**
**B1**

(12) **EUROPÄISCHE PATENTSCHRIFT**

(45) Veröffentlichungstag der Patentschrift:
29.03.89

(21) Anmeldenummer: 84105897.7

(22) Anmeldetag: 24.05.84

(51) Int. Cl.⁴: **H 01 S 3/03**

(54) **Gaslaser, insbesondere schnellströmender Axialstrom-Gastransportlaser.**

(30) Priorität: 02.07.83 DE 3323954

(43) Veröffentlichungstag der Anmeldung:
09.01.85 Patentblatt 85/2

(45) Bekanntmachung des Hinweises auf die Patenterteilung:
29.03.89 Patentblatt 89/13

(84) Benannte Vertragsstaaten:
AT BE CH DE FR GB IT LI NL SE

(56) Entgegenhaltungen:
EP-A-0 073 992
DE-A-2 925 829
DE-A-3 027 321
US-A-3 863 103

PATENTS ABSTRACTS OF JAPAN, Band 5, Nr. 95 (E-62) 767 , 20. Juni 1981; & JP-A-56 40 290 (HITACHI SEISAKUSHO K.K.) 16.04.1981

(73) Patentinhaber: **MESSER GRIESHEIM GMBH,
Hanauer Landstrasse 330, D-6000 Frankfurt/Main 1
(DE)**

(72) Erfinder: **Beyer, Eckhard, Dresdenerstrasse 22,
D-6105 Ober- Ramstadt (DE)**
Erfinder: **Bakowsky, Lothar, Dr., Klarastrasse 1,
D-6238 Hofheim/Ts. (DE)**
Erfinder: **Herziger, Gerd, Prof. Dr., Fasanenweg 2,
D-6101 Rossdorf 2 (DE)**
Erfinder: **Loosen, Peter, Katzenberg 13, D-6500
Mainz 65 (DE)**

## Beschreibung

Die Erfindung betrifft einen Gaslaser nach dem Oberbegriff des Anspruchs 1.

Bei solchen Gaslasern soll zur Erhöhung der Laserausgangsleistung einerseits der Entladungsrohrinnendurchmesser den optimalen Lasergasdurchsatz bei geringster Variation des Druckabfalls zwischen den Gaseinlaß- und auslaßöffnungen des Entladungsrohres und andererseits durch eine Verwirbelung des Lasergases, insbesondere auch im Endkopf die Homogenität der Entladung im Entladungsrohr gewährleistet sein.

Es ist bekannt, zur Erfüllung dieser Erfordernisse bei einem schnellströmenden Gaslaser einerseits den Entladungsrohrinnenquerschnitt entsprechend dem Lasergasstrahldurchmesser auszubilden und andererseits die Homogenität der Lasergasentladung durch Maßnahmen zur Strömungsführung zu ermöglichen. Die Lasergasentladung erfolgt hierbei über in Endköpfen angeordnete Ringelektroden.

Bei dieser bekannten Entladungsrohrausbildung mit optimalem Rohrdurchmesser und Lasergaseinströmung an Ringelektroden ist von Nachteil, daß keine vollständige Homogenisierung erreicht wird.

Aus der DE-OS-3 027 321 ist ein langsamströmender Laser mit stabilisiertem Wirbelfluß bekannt geworden, bei dem mindestens ein Rippenring im Entladungsrohr konzentrisch zur Längsachse des Entladungsrohres und des Gasflußes angebracht ist.

Untersuchungen haben ergeben, daß ein derartiger, in dem Entladungsrohr angeordneter Rippenring, bei dem eingangs beschriebenen schnellströmenden Gaslaser zu keiner Erhöhung der Laserausgangsleistung führt.

Der Erfindung liegt die Aufgabe zugrunde, die Laserausgangsleistung pro Meter Entladungsrohrlänge unter Beibehaltung gleicher Baugröße zu erhöhen.

Eine weitere Aufgabe besteht in der Verbesserung der Strahlqualität durch die Homogenisierung der Lasergasentladung. Diese Aufgabe wird bei einem gattungsgemäßen Gaslaser durch die kennzeichnenden Merkmale des Anspruchs 1 gelöst.

Vorteilhafte Weiterbildungen der Erfindung sind in den Unteransprüchen angegeben.

Die mit der Erfindung erzielten Vorteile bestehen insbesondere darin, daß mit der plötzlichen unstetigen Erweiterung des Entladungsrohrinnenquerschnitts und den vorzugsweise im erweiterten Querschnitt angeordneten Blenden bei tangentialer Lasereinströmung und geschlitzter Gasverteilung die Homogenisierung der Gasentladung über die gesamte Entladungsrohrlänge und damit die maximale Ausgangsleistung des Gaslasers pro Meter Entladungsrohrlänge von bisher 500 Watt auf 1 000 Watt ohne wesentliche Vergrößerung der Baueinheit erhöhbar ist. Mit der Erfindung und zeitlichen Stabilisierung der Leistung ist neben der Erhöhung der Bearbeitungsgeschwindigkeit vor allen Dingen auch eine Verbesserung von Qualität und Reproduzierbarkeit der Schweißergebnisse, sowie eine geringere Spiegelverschmutzung verbunden.

Ein Ausführungsbeispiel ist in der Zeichnung dargestellt und wird im folgendem unter Hinweis auf weitere vorteilhafte Merkmale näher beschrieben.

Es veranschaulicht:

Fig. 1    einen schematischen Aufbau des Axialstrom-Gastransportlasers;

Fig. 2    eine schematische Schnittdarstellung der tangentialen Lasergaseinströmung;

Fig. 3    eine schematische Längsschnittdarstellung des Entladungsrohres nach der Erfindung mit einem Endkopf und einer Gasverteilung;

Fig. 4    eine perspektivische Darstellung des Entladungsrohres mit der Blendenanordnung im Diffusor.

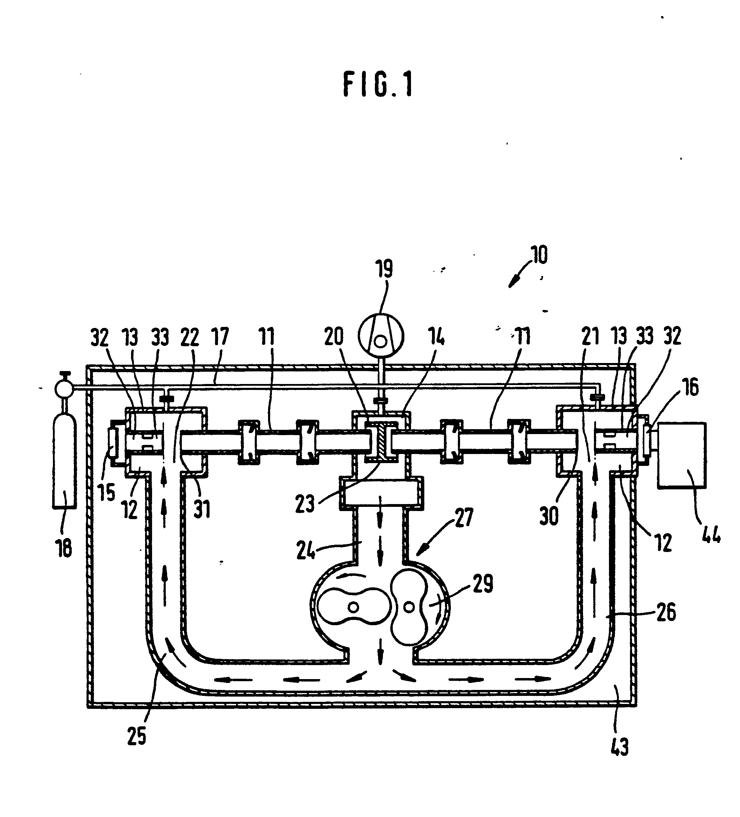

In Fig. 1 ist mit 10 ein Axialstrom-Gastransportlaser veranschaulicht. Der Laser 10 besteht im wesentlichen aus zwei Laserentladungsrohren 11, die in zwei Endköpfen 12 gelagert und über einen Verbindungskopf 20 miteinander verbunden sind. Die Endköpfe 12 und der Verbindungskopf 20 sind an einer nicht näher dargestellten Hochspannungsquelle angeschlossen. Der Pluspol der Hochspannungsquelle ist mit den Innenräumen 13 der Endköpfe 12 und der Minuspol der Hochspannungsquelle mit dem Innenraum 14 des Verbindungskopfes 20 verbunden. In besonders vorteilhafter Weise werden Endköpfe 12 bzw. der Verbindungskopf 20 aus Aluminium hergestellt.

Die Laserspiegel sind mit 15 und 16 bezeichnet.

Über Leitungen 17 wird dem Laser 10 kontinuierlich eine Gaslasermenge über die Gasversorgung 18 zugeführt. Das Lasergas ist dabei bevorzugt ein Helium-Stickstoff-Kohlendioxid-Gemisch. Zur Aufrechterhaltung eines mittleren Druckes innerhalb der Entladungsrohre 11 von ca. 70 mbar sind die Entladungsrohre 11 mit einer Vakuumpumpe 19 verbunden.

An den Endköpfen 12 ist jeweils eine Lasergaseinlaßöffnung 21, 22 vorgesehen. Ferner weist der Verbindungskopf 20 vorzugsweise in der Mitte eine Lasergasauslaßöffnung 23 auf. Gaseinlaßöffnungen 21 und 22 sowie die Gasauslaßöffnung 23 sind über Leitungen 24, 25, 26 mit einer Einheit 27 zum Kühlen und Transportieren des Lasergases verbunden. Die Kühl/Transporteinheit 27 weist ein Gebläse 29 auf, welches vorzugsweise als Rootsgebläse ausgebildet ist. Durch die tangentiale Einströmung des Lasergases an den Endköpfen 12 und die Absaugung an dem Verbindungskopf 20 wird eine Strömungsrichtung entgegen der Laserspiegelanordnung 15, 16 erreicht und somit die Verschmutzungsgefahr von Auskoppelplatte und Spiegel 15, 16 verringert.

In den Endköpfen 12 ist den Entladungsrohrenden 30, 31 gegenüberliegend je eine Gasverteilung 32 vorgesehen, die als Rohr 33 ausgebildet ist. Die Gasverteilungen 32 sind als Kragarme ausgebildet, deren Abschlußkanten 37 der freien Enden 36 deckungsgleich zu den Mittelachsen 38 der Gaseinlaßöffnungen 21, 22 angeordnet sind. Die Gasverteilungen 32, deren Mittelachsen 39 mit der Entladungsrohrmittelachse 40 zusammenfallen, weisen an den freien Enden 36 des Kragarmes vorzugsweise je 3 schlitzförmige Ausnehmungen 41 auf. Die schlitzförmigen Ausnehmungen 41 sind vorzugsweise in einem Abstand von 14 mm von der Abschlußkante 37 entfernt in das Glasrohr 33 eingebracht. Die Breite der rechtwinklig zur Mittelachse 39 am Umfang der Gasverteilung 32 angeordneten Schlitze 41 beträgt vorteilhaft 10 mm und der Abstand zwischen der Abschlußkante 37 und der Stirnseite 42 der Lasergasentladungsrohre 11 ebenfalls 10 mm.

Wie die Fig. 1 ferner zeigt, ist der gesamte Gastransportlaser 10 als Baueinheit ausgebildet und in einem gemeinsamen Gehäuse 43 angeordnet. An der Baueinheit/Gehäuse 43 ist ein Schneidkopf 44 befestigt, in welchem über Spiegel und weitere optische Einrichtungen der Laserstrahl auf ein zu bearbeitendes Werkstück fokussiert werden kann.

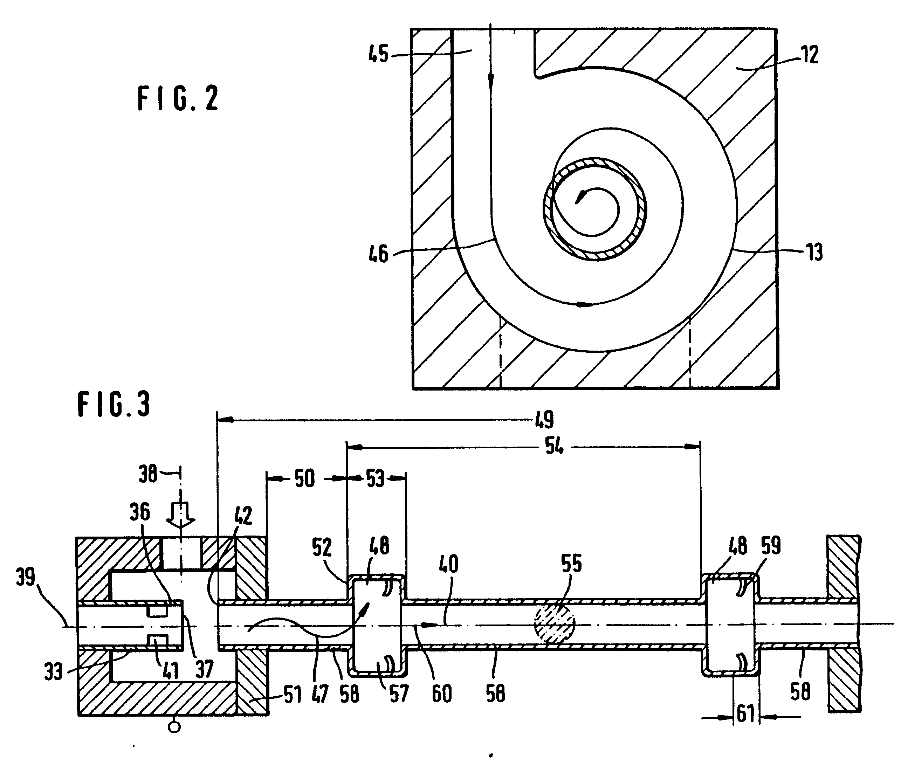

In Fig. 2 ist die tangentiale Lasergaseinströmung entsprechend Pfeilrichtung 45 in einen Endkopf 12 und die Entladungsrohre 11 schematisch im Schnitt dargestellt. Dabei erfolgt der Transport des Lasergases in den Endkopf 12 über die Leitungen 24, 26 und von dort in die Entladungsrohre 11. Diese tangentiale Lasergaseinströmung 45 führt in Verbindung mit der geschlitzten Gasverteilung 32 einerseits zu einer Homogenisierung im Endkopf 12. Die Entladung setzt homogen an der gesamten Kopfinnenseite in den Innenräumen 13 ein. Andererseits führt die tangentiale Lasergaseinströmung 45 zu einer erzwungenen Gasrotation, so daß sich die Entladung zum Rohrende hin zusammenzieht.

Die mit diesem erzwungenen Drehimpuls 46 des Lasergases erzeugte Rotation führt in den Entladungsrohren 11 zu einer Zone kleiner Strömungsgeschwindigkeit, die zur Ausbildung eines Makrowirbels 47 führt. Wie Fig. 3 zeigt, weisen die Entladungsrohre 11 an zwei durch die Wellenlänge des Makrowirbels 47 definierten Stellen plötzliche, unstetige Entladungsrohrquerschnittserweiterungen 48 (Carnot-Diffusoren) auf.

Empirische Untersuchungen ergaben bei einer wahlweisen Entladungsrohrlänge 49 von 600 bzw. 460 mm einen Abstand 50 von 50 mm zwischen Endkopflagerwand 51 und Anfang 52 der ersten Entladungsrohrquerschnittserweiterung 48. Als bevorzugte Länge 53 der in einem Entladungsrohrdiffusorteil 57 vorgesehenen Entladungsrohrquerschnittserweiterungen 48 wurden 40 mm ermittelt. Der Abstand 54 zwischen erstem und zweiten Diffusor 57 beträgt vorteilhaft 220 mm. Bei einem Innenquerschnitt 55 der Entladungsrohrmodule 11 von 28 mm betrug der erweiterte Entladungsrohrquerschnitt 40 mm.

Als besonders vorteilhafte Diffusorwerkstoffe erwiesen sich im Bezug auf die Haltbarkeit bzw. Wärmeableitung Metalle, Keramik oder Glas.

Die in Fig. 3 dargestellten Diffusoren 57 bilden mit dem angrenzenden Laserentladungsrohrteilen 58 einstückig ein Ganzes.

Selbstverständlich ist es auch möglich, die Diffusoren 57 austauschbar mit den Entladungsrohren 11 zu verbinden, so daß bei sich ändernden Betriebsbedingungen und sich ändernder Ausbildung des Makrowirbels 47 die Abstände 50, 54 sowie die konstruktive Ausbildung der Entladungsrohrteile 58 und der Diffusoren 57 diesen neuen Betriebsbedingungen in einfachster Art und Weise angepaßt werden können.

Durch die plötzlichen unstetigen Entladungsrohrquerschnittserweiterungen 48 bilden sich sehr starke Wirbel, die zu einer Homogenisierung der Gasentladung über die gesamte Läge der Entladungsrohre 11 und damit zu einer Steigerung der Laserausgangsleistung führt.

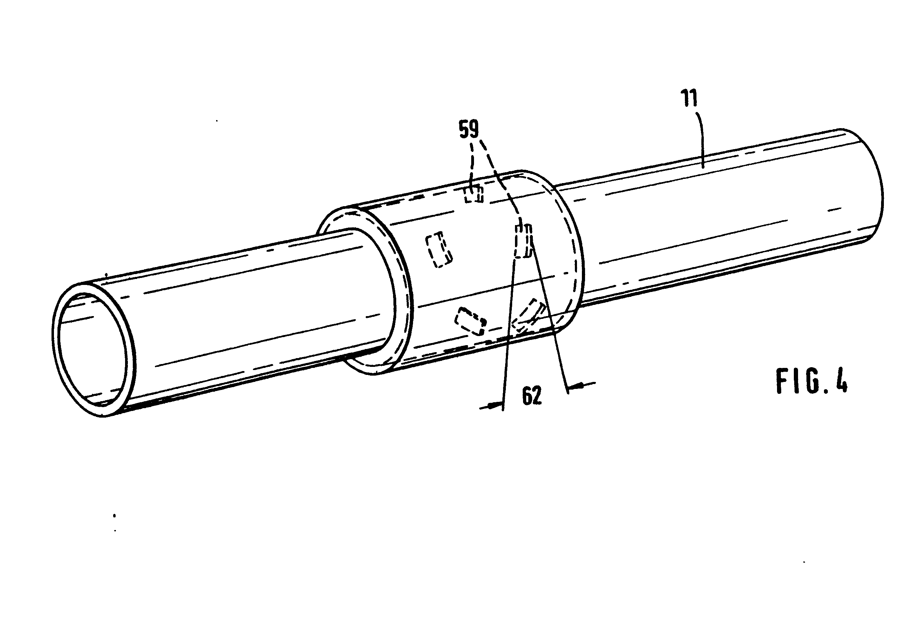

In den plötzlichen unstetigen Entladungsrohrquerschnittserweiterungen 48 sind Blenden 59 vorgesehen, die gegen die Lasergasströmungsrichtung 60 vorzugsweise unter einem Anstellwinkel 62 von 15 bis 30° verdreht angeordnet sind. Wie die Figuren 3 und 4 zeigen, sind die Blenden 59 in Lasergasströmungsrichtung 60 im hinteren Bereich 61 fest mit den Diffusoren 57 verbunden.

Selbstverständlich ist es auch vorteilhaft möglich, die Blenden 59 in den Diffusoren 57 austauschbar und verstellbar anzuordnen. Wie hierbei erste Versuche in der Praxis aufzeigten, ist es besonders sinnvoll, den Anstellwinkel 62 sowie die Höhe und die Lage der Blenden 59 am Umfang des Diffusors 57 verstellbar auszubilden. Wie insbesondere Fig. 4 zeigt, weist der Diffusor 57 bevorzugt fünf aus einem der Werkstoffe Metall, Glas oder Keramik bestehende Blenden 59 auf.

Mit dem eingangs beschriebenen Axialstrom-Gastransportlaser 10 nach der Erfindung mit zwei Entladungsrohren 11 wurde eine Ausgangsleistungssteigerung von bisher 500 Watt auf 1 000 Watt bei gleicher Baugröße und gleicher Entladungsrohrlänge erreicht.

## Patentansprüche

1. Gaslaser, insbesondere schnellströmender Axialstrom-Gastransportlaser, mit einem lasergasdurchstömten Entladungsrohr dadurch gekennzeichnet, daß das lasergasdurchströmte Entladungsrohr (11) mindestens eine plötzliche, unstetige Entladungsrohrquerschnittserweiterung (48) aufweist.

2. Gaslaser nach Anspruch 1, dadurch gekennzeichnet, daß die Entladungsrohrquerschnittserweiterung (48) in Abhängigkeit von Drehimpuls (46) und Massendurchsatz im Entladungsrohr (11) angeordnet ist.

3. Gaslaser nach Anspruch 1 oder 2, dadurch gekennzeichnet, daß der erweiterte Entladungsrohrquerschnitt (48) das 1,2 bis 1,6 fache des Innenquerschnitts (55) des Entladungsrohres (11) beträgt.

4. Gaslaser nach einem der Ansprüche 1 bis 3, dadurch gekennzeichnet, daß der erweiterte Entladungsrohrquerschnitt (48) in einem Entladungsrohrdiffusorteil (57) vorzugsweise mit einer Länge (53) von 40 Millimetern vorgesehen ist.

5. Gaslaser nach Anspruch 4, dadurch gekennzeichnet, daß der Diffusor (57) mit den angrenzenden Entladungsrohrteilen (58) einstückig ein Ganzes bildet.

6. Gaslaser nach Anspruch 4 oder 5, dadurch gekennzeichnet, daß der Diffusor (57) austauschbar mit den angrenzenden Entladungsrohrteilen (58) verbunden ist.

7. Gaslaser nach einem der Ansprüche 4 bis 6, dadurch gekennzeichnet, daß der Werkstoff des Diffusors (57) Metall ist.

8. Gaslaser nach einem der Ansprüche 4 bis 6, dadurch gekennzeichnet, daß der Werkstoff des Diffusors (57) Keramik ist.

9. Gaslaser nach einem der Ansprüche 4 bis 6, dadurch gekennzeichnet, daß der Werkstoff des Diffusors (57) Glas ist.

10. Gaslaser nach einem der Ansprüche 4 bis 9, dadurch gekennzeichnet, daß in dem Diffusor (57) Blenden (59) angeordnet sind.

11. Gaslaser nach Anspruche 10, dadurch gekennzeichnet, daß die Blenden (59) gegen die Lasergasströmungsrichtung (60) vorzugsweise unter einem Anstellwinkel (62) zwischen 15° und 30° verdreht angeordnet sind.

12. Gaslaser nach Anspruch 10 oder 11, dadurch gekennzeichnet, daß die Blenden (59) in Lasergasströmungsrichtung (60) im hinteren Bereich (61) des Diffusors (57) angeordnet sind.

13. Gaslaser nach einem der Ansprüche 10 bis 12, dadurch gekennzeichnet, daß die Blenden (59) fest in dem Diffusor (57) angeodnet sind.

14. Gaslaser nach einem der Ansprüche 10 bis 13, dadurch gekennzeichnet, daß die Blenden (59) austauschbar in dem Diffusor (57) vorgesehen sind.

15. Gaslaser nach einem der Ansprüche 10 bis 14, dadurch gekennzeichnet, daß die Blenden (59) verstellbar in dem Diffusor (57) angeordnet sind.

16. Gaslaser nach einem der Ansprüche 10 bis 15, dadurch gekennzeichnet, daß der Anstellwinkel (62) der Blenden (59) verstellbar ist.

17. Gaslaser nach einem der Ansprüche 10 bis 16, dadurch gekennzeichnet, daß die Blenden (59) am Umfang des Diffusors (57) positionsverschiebbar angeordnet sind.

18. Gaslaser nach einem der Ansprüche 10 bis 17, dadurch gekennzeichnet, daß die Blenden (59) zur Mittelachse (40) des Diffusors (57) hin höhenverstellbar sind.

19. Gaslaser nach einem der Ansprüche 10 bis 18, dadurch gekennzeichnet, daß die Blenden (59) aus einem der Werkstoffe Metall, Glas, Keramik oder einer Kombination dieser Werkstoffe bestehen.

20. Gaslaser nach einem der Ansprüche 10 bis 19, dadurch gekennzeichnet, daß mindestens eine, vorzugsweise fünf Blenden (59) in dem Diffusor (57) angeordnet sind.

21. Gaslaser nach einem der Ansprüche 1 bis 20, dadurch gekennzeichnet, daß das Entladungsrohr (11) an zwei Endköpfen (12, 20) mit tangentialer Lasergaseinlaß- (21, 22) bzw. Lasergasauslaßöffnungen (23) angeschlossen ist.

22. Gaslaser nach Anspruch 21, dadurch gekennzeichnet, daß in dem einen Endkopf (12) eine Gasverteilung (32) vorgesehen ist.

23. Gaslaser nach Anspruch 21 oder 22, dadurch gekennzeichnet, daß die Mittelachse (38) der Gaseinlaßöffnung (21, 22) deckungsgleich zur Abschlußkante (37) eines freien Endes (36) der Gasverteilung (32) angeordnet ist.

24. Gaslaser nach Anspruch 23, dadurch gekennzeichnet, daß die Gasverteilung (32) als Rohr (33) ausgebildet ist.

25. Gaslaser nach Anspruch 23 oder 24, dadurch gekennzeichnet, daß die Mittelachse (39) der Gasverteilung (32) mit der Entladungsrohrmittelachse (40) zusammenfällt.

26. Gaslaser nach einem der Ansprüche 23 bis 25, dadurch gekennzeichnet, daß der Abstand (54) zwischen Abschlußkante (37) und der Stirnseite (42) des Entladungsrohrs (11) mindestens 3 mm und höchstens 20 mm beträgt.

27. Gaslaser nach einem der Ansprüche 22 bis 26, dadurch gekennzeichnet, daß die Gasverteilung (32) aus einem nichtleitenden Werkstoff, vorzugsweise Glas, besteht.

28. Gaslaser nach einem der Ansprüche 1 bis 27,

dadurch gekennzeichnet, daß an zwei Endköpfen (12), vorzugsweise deren Innenräumen (13, 14), des Entladungsrohres (11) ein Hochspannungspotential anliegt.

**Claims**

1. Gas laser, especially fast-flow axial-flow gas transport laser, having a discharge tube through which laser gas flows, characterized in that the discharge tube (11) through which laser gas flows exhibits at least one sudden, discontinuous enlargement (48) of the discharge tube cross-section.

2. Gas laser according to Claim 1, characterized in that the enlargement (48) of the discharge tube cross-section is disposed in the discharge tube (11) as a function of angular momentum (46) and mass flow rate.

3. Gas laser according to Claim 1 or 2, characterized in that the enlarged discharge tube cross-section (48) is 1.2 to 1.6 times the internal cross-section (55) of the discharge tube (11).

4. Gas laser according to one of Claims 1 to 3, characterized in that the enlarged discharge tube cross-section (48) is provided in a discharge tube diffuser part (57) preferably with a length (53) of 40 millimetres.

5. Gas laser according to Claim 4, characterized in that the diffuser (57) integrally forms a complete unit with the adjoining discharge tube parts (58).

6. Gas laser according to Claim 4 or 5, characterized in that the diffuser (57) is exchangeably connected to the adjoining discharge tube parts (58).

7. Gas laser according to one of Claims 4 to 6, characterized in that the material of the diffuser (57) is metal.

8. Gas laser according to one of Claims 4 to 6, characterized in that the material of the diffuser (57) is ceramic.

9. Gas laser according to one of Claims 4 to 6, characterized in that the material of the diffuser (57) is glass.

10. Gas laser according to one of Claims 4 to 9, characterized in that shields (59) are disposed in the diffuser (57).

11. Gas laser according to Claim 10, characterized in that the shields (59) are disposed so as to be rotated relative to the direction of flow (60) of the laser gas preferably at an angle of incidence (62) between 15° and 30°.

12. Gas laser according to Claim 10 or 11, characterized in that the shields (59) are disposed in the rear region (61) of the diffuser (57) in the direction of flow (60) of the laser gas.

13. Gas laser according to one of Claims 10 to 12, characterized in that the shields (59) are fixedly disposed in the diffuser (57).

14. Gas laser according to one of Claims 10 to 13, characterized in that the shields (59) are exchangeably provided in the diffuser (57).

15. Gas laser according to one of Claims 10 to 14, characterized in that the shields (59) are adjustably disposed in the diffuser (57).

16. Gas laser according to one of Claims 10 to 15, characterized in that the angle of incidence (62) of the shields (59) is adjustable.

17. Gas laser according to one of Claims 10 to 16, characterized in that the shields (59) are disposed at the periphery of the diffuser (57) so as to be adjustable in their position.

18. Gas laser according to one of Claims 10 to 17, characterized in that the shields (59) are adjustable in height towards the central axis (40) of the diffuser (57).

19. Gas laser according to one of Claims 10 to 18, characterized in that the shields (59) consist of one of the materials metal, glass, ceramic or a combination of these materials.

20. Gas laser according to one of Claims 10 to 19, characterized in that at least one, preferably five shields (59) are disposed in the diffuser (57).

21. Gas laser according to one of Claims 1 to 20, characterized in that the discharge tube (11) is connected to two end heads (12, 20) with tangential laser gas inlet openings (21, 22) and laser gas outlet openings (23) respectively.

22. Gas laser according to Claim 21, characterized in that a gas distribution (32) is provided in one of the end heads (12).

23. Gas laser according to Claim 21 or 22, characterized in that the central axis (38) of the gas inlet opening (21, 22) is disposed to coincide with the end edge (37) of a free end (36) of the gas distribution (32).

24. Gas laser according to Claim 23, characterized in that the gas distribution (32) is constructed as tube (33).

25. Gas laser according to Claim 23 or 24, characterized in that the central axis (39) of the gas distribution (32) coincides with the central axis (40) of the discharge tube.

26. Gas laser according to one of Claims 23 to 25, characterized in that the spacing (54) between end edge (37) and the end face (42) of the discharge tube (11) is at least 3 mm and at most 20 mm.

27. Gas laser according to one of Claims 22 to 26, characterized in that the gas distribution (32) consists of a non-conducting material, preferably glass.

28. Gas laser according to one of Claims 1 to 27, characterized in that a high-voltage potential is applied to two end heads (12), preferably their interior spaces (13, 14), of the discharge tube (11).

**Revendications**

1. Laser à gaz, notamment laser à transport de gaz à écoulement axial rapide comportant un tube à décharge traversé par le gaz laser, laser caractérisé en ce que le tube à décharge (11) parcouru par le gaz laser présente au moins une augmentation brusque non continue (48) de la section du tube à décharge.

2. Laser à gaz selon la revendication 1, caractérisé en ce que l'augmentation de la section du tube à décharge (48) est fait en fonction de l'impulsion de rotation (48) et du débit massique dans le tube à décharge (11).

3. Laser à gaz selon la revendication 1 ou 2, caractérisé en ce que l'augmentation de la section du tube à décharge (48) est comprise entre 1,2 et 1,6 fois la section intérieure (55) du tube à décharge (11).

4. Laser à gaz selon l'une des revendications 1 à 3, caractérisé en ce que l'augmentation de la section du tube à décharge (48) est prévue dans une partie de diffuseur (57) du tube à décharge, de préférence sur une longueur (53) de 40 mm.

5. Laser à gaz selon la revendication 4, caractérisé en ce que le diffuseur (57) fait une seule pièce avec les parties adjacentes (58) du tube à décharge.

6. Laser à gaz selon l'une des revendications 4 ou 5, caractérisé en ce que en ce que le diffuseur (57) est relié, de manière interchangeable, aux parties adjacentes (58) du tube à décharge.

7. Laser à gaz selon l'une des revendications 4 à 6, caractérisé en ce que le matériau du diffuseur (57) est du métal.

8. Laser à gaz selon l'une des revendications 4 à 6, caractérisé en ce que le matériau du diffuseur (57) est de la céramique.

9. Laser à gaz selon l'une des revendications 4 à 6, caractérisé en ce que le matériau du diffuseur (57) est du verre.

10. Laser à gaz selon l'une des revendications 4 à 9, caractérisé en ce que des diaphragmes (59) sont réalisés dans les diaphragmes (57).

11. Laser à gaz selon la revendication 10, caractérisé en ce que les diaphragmes (59) sont tournés contre la direction d'écoulement du gaz laser (60), de préférence suivant un angle (62) compris entre 15° et 30°.

12. Laser à gaz selon l'une des revendications 10 ou 11, caractérisé en ce que les diaphragmes (59) sont prévus dans la zone arrière (61) du diffuseur (57) suivant le sens d'écoulement du gaz laser (60).

13. Laser à gaz selon l'une des revendications 10 à 12, caractérisé en ce que les diaphragmes (59) sont solidaires du diffuseur (57).

14. Laser à gaz selon l'une des revendications 10 à 13, caractérisé en ce que les diaphragmes (59) sont montés de manière interchangeable sur le diffuseur (57).

15. Laser à gaz selon l'une des revendications 10 à 14, caractérisé en ce que les diaphragmes (59) sont montés de manière réglable sur le diffuseur (57).

16. Laser à gaz selon l'une des revendications 10 à 15, caractérisé en ce que l'angle (62) des diaphragmes (59) est réglable.

17. Laser à gaz selon l'une des revendications 10 à 16, caractérisé en ce que les diaphragmes (59) sont montés coulissant en position à la périphérie du diffuseur (57).

18. Laser à gaz selon l'une des revendications 10 à 17, caractérisé en ce que les diaphragmes (59) sont réglables en hauteur par rapport à l'axe (40) du diffuseur (57).

19. Laser à gaz selon l'une des revendications 10 à 18, caractérisé en ce que les diaphragmes (59) sont en métal, en verre, en céramique ou en une combinaison de ces matériaux.

20. Laser à gaz selon l'une des revendications 10 à 19, caractérisé en ce que le diffuseur (57) comporte au moins un diaphragme (59) et, de préférence, cinq diaphragmes.

21. Laser à gaz selon l'une des revendications 1 à 20, caractérisé en ce que le tube à décharge (11) est relié à deux têtes d'extrémités (12, 20) munies d'entrées tangentielles de gaz laser (21, 22) ou d'orifices de sortie de gaz laser (23).

22. Laser à gaz selon la revendication 21, caractérisé par un dispositif de répartition de gaz (32) dans une tête d'extrémité (12).

23. Laser à gaz selon l'une des revendications 21 ou 22, caractérisé en ce que l'axe (38) de l'ouverture d'entrée de gaz (21, 22) coïncide avec l'arête (37) de l'une des extrémités libres (36) du dispositif de répartition de gaz (32).

24. Laser à gaz selon la revendication 23, caractérisé en ce que le dispositif de répartition de gaz (32) est en forme de tube (33).

25. Laser à gaz selon l'une des revendications 23 ou 24, caractérisé en ce que l'axe (39) du dispositif de répartition de gaz (32) coïncide avec l'axe (40) du tube à décharge.

26. Laser à gaz selon l'une des revendications 23 à 25, caractérisé en ce que la distance (54) entre l'arête (37) et la face frontale (42) du tube à décharge (11) est au moins égale à 3 mm et au plus égale à 20 mm.

27. Laser à gaz selon l'une des revendications 22 à 26, caractérisé en ce que le dispositif de répartition de gaz (32) est en un matériau non conducteur, de préférence du verre.

28. Laser à gaz selon l'une des revendications 1 à 27, caractérisé en ce que aux deux têtes d'extrémité (12), de préférence les volumes intérieurs (13, 14) sont reliés au potentiel de haute tension du tube à décharge (11).

# FIG.1

FIG. 2

FIG. 3

EP 0 130 346 B1

FIG.4